# EUROPÄISCHE PATENTANMELDUNG

(11) **EP 2 326 147 A2**
(43) Veröffentlichungstag der Anmeldung: **25.05.2011**
(21) Anmeldenummer: 10191947.0
(22) Anmeldetag: 19.11.2010
(51) Int. Cl.: H05B 41/282, H02J 9/06

(54) **Betriebssteuergerät zum Betreiben eines Leuchtmittels**

(30) Priorität: 19.11.2009 DE 102009044593
(71) Anmelder: Vossloh-Schwabe Deutschland GmbH, 73660 Urbach (DE)
(72) Erfinder: Braunschmid, Peter, 73430 Aalen (DE); Bulling, Martin, 73527 Schwäbisch Gmünd (DE); Cernek, Markus, 71404 Korb (DE); Abele, Manfred, 73577 Ruppertshofen (DE)
(74) Vertreter: Rüger, Barthelt & Abel Patentanwälte

(57) **Zusammenfassung**

Die Erfindung betrifft ein Betriebssteuergerät (5) zum Betreiben eines Leuchtmittels (6), beispielsweise einer Gasentladungslampe (6a). Ein Eingangskreis (8) ist an eine Wechselspannungsquelle (9) anschließbar und durch einen Speicherübertrager (12) in einen Primärkreis (10) und einen Sekundärkreis (11) getrennt. Das Betriebssteuergerät (5) weist eine Leistungsfaktorkorrekturschaltung (25) mit einer Ansteuerschaltung (26) auf. Die Ansteuerschaltung (26) ist im Primärkreis (10) oder im Sekundärkreis (11) enthalten. Sie steuert einen gesteuerten Schalter (20) in Reihe zur Primärwicklung (13) des Speicherübertragers (12) derart an, dass der Blindleistungsanteil möglich gering ist und ein Leistungsfaktor nahe 1 erreicht wird. Hierfür wird der Ansteuerschaltung (26) eine Primärspannung (UP) und der Primärstrom (IP) zugeführt. Gleichzeitig dient die Leistungsfaktorkorrekturschaltung (25) auch zur Regelung der am Sekundärkreis (11) zur Verfügung gestellten Versorgungsspannung (UV) für den Ausgangskreis (7). Zu diesem Zweck wird die Versorgungsspannung (UV) erfasst und der Ansteuerschaltung (26) als Regelgröße (R) zur Verfügung gestellt.

## Beschreibung

Die Erfindung betrifft ein Betriebssteuergerät zum Betreiben eines Leuchtmittels, wie zum Beispiel einer Gasentladungslampe, einer Leuchtstofflampe, einer Hochdruckentladungslampe, einer Kompaktleuchtstofflampe, einer Leuchtdiode oder einer Halogenlampe.

Ein solches Betriebssteuergerät ist beispielsweise aus der EP 1 507 327 A1 bekannt. Es weist eine Gleichrichterschaltung auf, die an eine Wechselspannungsquelle anschließbar ist. Die Gleichrichterschaltung weist einen Eingangsgleichrichter und einen Transformator auf, der primärseitig drei Windungen und sekundärseitig zwei Windungen umfasst. Eine der primärseitigen Windungen dient als Messspule zur Messung eines Primärspannungswertes. Abhängig vom gemessenen Primärspannungswert wird der Primärstromgrenzwert eingestellt. Die primärseitige Regelung erzeugt sekundärseitig eine Ausgangsspannung, die auch von der an die Sekundärseite angeschlossenen Last abhängt. Gleichermaßen hängt auch eine sekundärseitige Ladespannung bzw. ein sekundärseitiger Ladestrom für einen Akkumulator einer Notspannungsversorgung für das Leuchtmittel von den Lastverhältnissen ab und wird auf der Sekundärseite nicht geregelt. Auf der Primärseite ist ferner eine Leistungsfaktorkorrekturschaltung mit Hilfe eines Inverters vorgesehen.

Die DE 102 59 585 A1 beschreibt ein Betriebssteuergerät für den Betrieb mehrerer Lampen, das einen Notfallabschnitt aufweist. Allerdings ist bei diesem Betriebssteuergerät keine durchgängige galvanische Trennung vorgesehen. Der schaltungstechnische Aufwand ist insgesamt sehr groß. Der Notfallabschnitt weist eine Batterie auf, die an ein Schaltnetzteil angeschlossen ist. Das Schaltnetzteil weist einen Trafo mit primärseitiger Steuereinheit auf.

Ausgehend von diesen bekannten Betriebssteuergeräten kann es als eine Aufgabe der vorliegenden Erfindung angesehen werden, eine verbesserte Leitungsfaktorkorrektur für ein Betriebssteuergerät zu schaffen.

Diese Aufgabe wird durch ein Betriebssteuergerät mit den Merkmalen des Patentanspruches 1 gelöst.

Beim erfindungsgemäßen Betriebssteuergerät ist ein Eingangskreis vorgesehen, der an eine Spannungsquelle anschließbar ist, beispielsweise eine Wechselspannungsquelle oder eine "Hochvolt"-Gleichspannungsquelle mit hoher Spannung. Der Eingangskreis stellt eine Versorgungsspannung für einen Ausgangskreis zur Verfügung, an den das Leuchtmittel angeschlossen wird. Der Eingangskreis ist in einen Primärkreis und einem galvanisch davon durchgängig getrennten Sekundärkreis unterteilt. Zur galvanischen Trennung wird bevorzugt ein Speicherübertrager mit einer Primärwicklung und einer Sekundärwicklung verwendet. Die Versorgungsspannung wird vom Sekundärkreis zur Verfügung gestellt und kann vorzugsweise gleichzeitig zur Spannungsversorgung einer Ladeschaltung einer Notspannungsversorgungseinrichtung für den Ausgangskreis dienen. Im Eingangskreis ist Leistungsfaktorkorrekturschaltung enthalten, die eine Ansteuerschaltung aufweist, der sowohl eine Primärspannung als Führungsgröße, als auch die vom Sekundärkreis bereit gestellte Versorgungsspannung als Eingangsparameter zugeführt werden. Dadurch ist es möglich, in der Leistungsfaktorkorrektureinrichtung die sekundärseitigen Lastverhältnisse zu berücksichtigen und sowohl eine Leistungsfaktorkorrektur, als auch eine Regelung der Versorgungsspannung zur Verfügung zu stellen. Der Blindleistungsanteil kann gegenüber den bekannten Ausführungen weiter reduziert werden.

Es ist vorteilhaft, wenn ein VersorgungsspannungsMesssignal der Versorgungsspannung bei im Primärkreis angeordneter Ansteuerschaltung über eine erste galvanische Trenneinrichtung an die Ansteuerschaltung übermittelt wird. Die galvanische Trennung wird dadurch auch für die Regelung der Leistungsfaktorkorrekturschaltung gewährleistet.

Über ein Ansteuersignal kann die Ansteuerschaltung vorzugsweise einen in Reihe mit der Primärwicklung geschalteten gesteuerten Schalter öffnen oder schließen, der als Transistor und bevorzugt als Feldeffekttransistor ausgeführt sein kann. Dieses Ansteuersignal kann bei im Sekundärkreis angeordneter Ansteuerschaltung über eine zweite galvanische Trenneinrichtung an den gesteuerten Schalter übermittelt werden.

Als weiteres Eingangssignal für die Leistungsfaktorkorrekturschaltung kann ein Stromverlauf dienen, der über eine Messspule erfasst wird. Insbesondere wird der Stromverlauf durch die Leistungsfaktorkorrekturschaltung zur Erkennung von Nulldurchgängen des Stromverlaufs ausgewertet. Insbesondere kann dadurch der Schaltzeitpunkt für das Umschalten des gesteuerten Schalters mit Hilfe des Ansteuersignals bestimmt werden.

Es ist weiterhin von Vorteil, wenn das der Primärspannung entsprechende Primärspannungs-Messsignal bei im Sekundärkreis angeordneter Ansteuerschaltung über eine dritte galvanische Trenneinrichtung an die Ansteuerschaltung übermittelt wird.

Vorteilhafterweise ist im Sekundärkreis die Notspannungsversorgungseinrichtung mit Ladeschaltung vorgesehen und daher galvanisch von der Spannungsquelle getrennt. An die Ladeschaltung ist ein Energiespeicher, insbesondere ein Energiespeicher, beispielsweise Akkumulkator, angeschlossen, so dass die Ladeschaltung die Ladespannung bzw. den Ladestrom für den Energiespeicher zur Verfügung stellt. Vorzugsweise kann die im Sekundärkreis bereitgestellte Versorgungsspannung sowohl zur Versorgung des Ausgangskreises, als auch zur Versorgung der Ladeschaltung verwendet werden. Es ist daher nicht notwendig aus der primärseitig anliegenden Spannung mehrere sekundärseitige Spannungspotenziale zu erzeugen. Alternativ hierzu können aber auch mehrere sekundärseitige Spannungspotentiale beispielsweise mittels mehrerer Sekundärwicklungen gebildet werden, so dass eine separate Ladespannung für die Ladeschaltung erzeugt werden kann.

Ferner kann durch die sekundärseitig vorhandene Ladeschaltung der Ladezustand des Energiespeichers bzw. Akkumulators sehr genau gesteuert oder geregelt werden. Insbesondere ist es möglich, den Ladestrom und/oder die Ladespannung unabhängig von der Last am Ausgangskreis mit Hilfe der Ladeschaltung einzustellen, so dass zu jedem Zeitpunkt ein ausreichender Ladezustand des Energiespeichers gewährleistet werden kann. Zudem werden ungünstige Ladebedingungen vermieden, was die Lebensdauer des Energiespeichers verlängert. Auf diese Weise ergibt sich ein Betriebssteuergerät, das flexibel für verschiedene Lasten am Ausgangskreis einsetzbar ist und dennoch einen sicheren Notbetrieb des Leuchtmittels durch den Energiespeicher gewährleistet.

Im Primärkreis kann ein Gleichrichter, beispielsweise in Form einer Gleichrichterbrücke mit vier Dioden vorgesehen sein. Auf diese Weise kann mit einfachen Mitteln eine Spannungsgleichrichtung erfolgen.

Die Notspannungsversorgungseinrichtung kann ferner einen Aufwärtswandler aufweisen, über den der Energiespeicher an die Versorgungsspannung angeschlossen ist, so dass unabhängig von der Spannung am Energiespeicher eine ausreichend große Spannung für den Ausgangskreis zur Verfügung gestellt werden kann, auch wenn die Spannungsversorgung durch die Wechselspannungsquelle aufgrund eines Fehlers nicht zur Verfügung steht.

Vorteilhafterweise weist der Sekundärkreis eine Sekundärkreis-Steuereinheit für die Notspannungsversorgungseinrichtung auf. Wegen der galvanischen Trennung des Sekundärkreises vom Primärkreis sind zusätzliche Schutzmaßnahmen für den Einsatz der Sekundärkreis-Steuereinheit nicht notwendig. Die Sekundärkreis-Steuereinheit kann eine oder mehrere der folgenden Aufgaben wahrnehmen:
- Steuerung der Ladeschaltung für den Energiespeicher bzw. Akkumulator,
- Steuerung des Aufwärtswandlers der Notspannungsversorgungseinrichtung,
- Steuerung des Ausgangkreises.

Insbesondere dient die Sekundärkreis-Steuereinheit dabei zur Ansteuerung von jeweils einem oder mehreren gesteuerten Schaltern in den genannten Schaltungsteilen. Die Sekundärkreis-Steuereinheit kann insbesondere von der Ansteuerschaltung der Leistungsfaktorkorrekturschaltung gebildet sein. Es ist somit möglich, mit einer einzigen Steuereinheit zur Steuerung aller Schaltungsteile des Betriebssteuergeräts auszukommen.

Bei einer weiteren vorteilhaften Ausführung weist der Ausgangskreis eine Halbbrückenschaltung zur Erzeugung einer Wechselspannung für einen Lampenkreis auf, an den das Leuchtmittel angeschlossen ist. Eine solche Ausführung ist beispielsweise beim Einsatz von Gasentladungslampen sinnvoll. Die Frequenz der Wechselspannung kann dabei über die Halbbrückenschaltung zum Zünden oder zur Aufrechterhaltung des Leuchtzustandes der Gasentladungslampe eingestellt werden.

Bei einer alternativen Ausgestaltung weist der Ausgangskreis einen Transformator auf, über den beispielsweise ein Leuchtmittel in Form einer Halogenlampe betrieben werden kann.

Die nachfolgende Beschreibung beschränkt sich auf wesentliche Aspekte der Erfindung sowie sonstiger Gegebenheiten. Die Zeichnung ist ergänzend heranzuziehen und offenbart Einzelheiten vorteilhafter Ausführungsformen der Erfindung. Es zeigen:
Fig. 1 ein Blockschaltbild eines ersten Ausführungsbeispiels eines Betriebssteuergeräts,
Fig. 2 ein Blockschaltbild einer Bezugsspannungsschaltung des ersten Ausführungsbeispiels,
Fig. 3 ein Blockschaltbild eines ersten Ausführungsbeispiels eines Ausgangskreises des Betriebssteuergeräts,
Fig. 4 ein Blockschaltbild eines weiteren Ausführungsbeispiel eines Ausgangskreises des Betriebssteuergeräts,
Fig. 5 ein Blockschaltbild eines Ausführungsbeispiels einer ersten galvanischen Trenneinrichtung und
Fig. 6 ein Blockschaltbild eines zweiten Ausführungsbeispiels eines Betriebssteuergeräts.

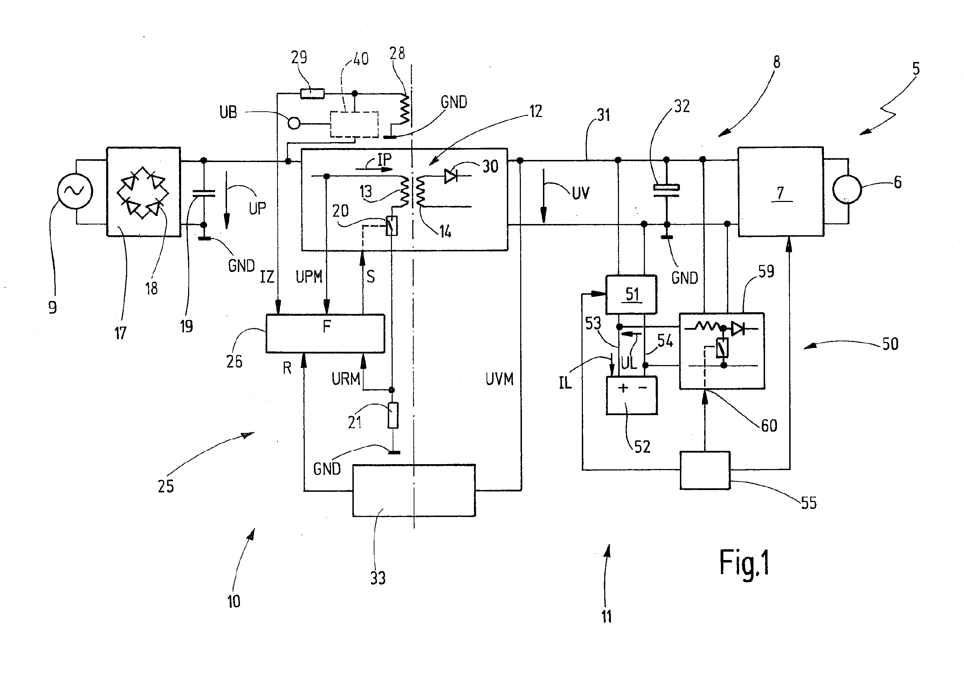

In Figur 1 ist ein Blockschaltbild einer ersten Ausführungsform für ein Betriebssteuergerät 5 zum Betreiben eines Leuchtmittels 6 dargestellt. Das Betriebssteuergerät 5 weist einen Ausgangskreis 7 auf, an den das Leuchtmittel 6 anschließbar ist. Ein Eingangskreis 8 des Betriebssteuergeräts 5 dient zu dessen Anschluss an eine Wechselspannungsquelle 9, beispielsweise an eine übliche 230 Volt Wechselspannungsquelle. Der Eingangskreis 8 ist galvanisch in einen Primärkreis 10 und einen Sekundärkreis 11 getrennt, was in Figur 1 durch die strichpunktierte Linie schematisch angedeutet ist. Die Trennung im Primärkreis 10 und Sekundärkreis 11 erfolgt beispielsgemäß mittels eines Speicherübertragers 12, der bei der Ausführungsform nach Figur 1 eine Primärwicklung 13 und eine Sekundärwicklung 14 aufweist.

Im Primärkreis 10 ist ein Gleichrichter 17 vorgesehen, der beim bevorzugten Ausführungsbeispiel als Gleichrichterbrücke mit vier Gleichrichterdioden 18 in bekannter Weise realisiert ist. Der Gleichrichter 17 ist zwischen die Wechselspannungsquelle 9 und die Primärwicklung 13 des Transformators 12 zwischengeschaltet. Parallel zum Ausgang des Gleichrichters 17 ist ein Glättungskondensator 19 geschaltet. Dort liegt eine Primärspannung UP an. In Reihe zur Primärspule 13 ist ein erster gesteuerter Schalter 20 vorgesehen, der über einen Messwiderstand 21 an Masse GND anliegt. Der erste gesteuerte Schalter 20 kann beispielsweise als Feldeffekttransistor ausgeführt sein.

Das Betriebssteuergerät enthält eine Leistungsfaktorkorrekturschaltung 25 mit einer Ansteuerschaltung 26. Die Ansteuerschaltung 26 öffnet oder schließt den ersten gesteuerten Schalter 20 über ein Ansteuersignal S. Beim ersten Ausführungsbeispiel ist die Ansteuerschaltung 26 im Primärkreis 10 angeordnet. Als Führungsgröße F wird der Ansteuerschaltung 26 das der Primärspannung UP entsprechende Primärspannungsmesssignal UPM zugeführt. Das am Messwiderstand gemessene Spannungsmesssignal URM stellt ein weiteres Einganssignal für die Ansteuerschaltung 26 dar und ist ein Maß für den Primärstrom IP durch die Primärwicklung 13.

Eine im Primärkreis 10 angeordnete Messspule 28 ist über einen Strombegrenzungswiderstand 29 mit der Ansteuerschaltung 26 verbunden und stellt einen Stromverlauf IZ als Eingangssignal zur Verfügung. Die Messspule 28 die Primärwicklung 13 und die Sekundärwicklung 14 sind auf einem gemeinsamen Kern angeordnet. Sie bilden daher eine Drossel.

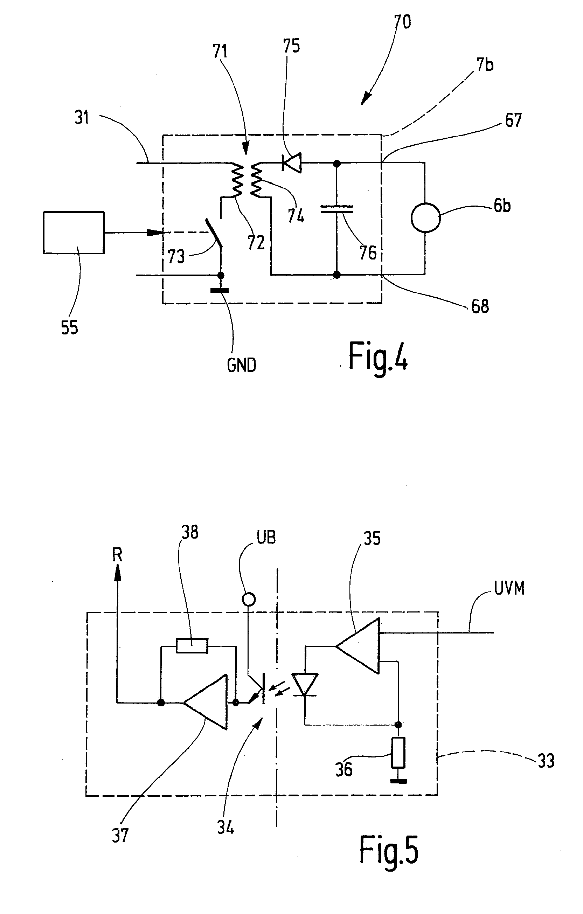

Die Sekundärwicklung 14 ist über eine Ausgangsdiode 30 an eine Versorgungsleitung 31 angeschlossen und mit ihrem anderen Wicklungsende auf Masse GND gelegt. Zwischen Versorgungsleitung 31 und Masse GND ist ein Ausgangskondensator 32 geschaltet, an dem eine Versorgungsspannung UV für den Ausgangskreis 7 anliegt. Ein Versorgungsspannungsmesssignal UVM wird über eine erste galvanische Trenneinrichtung 33 als Regelgröße R zur Spannungsregelung an die Ansteuerschaltung 26 übermittelt. Die erste galvanische Trenneinrichtung 33 gewährleistet die durchgehende galvanische Trennung zwischen Primärkreis 10 und Sekundärkreis 11, beispielsweise mit Hilfe eines Optokopplers 34, wie dies in Figur 5 beispielhaft dargestellt ist. Das Versorgungsspannungsmesssignal UVM ist an den nicht-invertierenden Eingang eines Differenzverstärkers 35 angelegt, dessen Ausgang mit der Anode der Leuchtdiode des Optokopplers 34 verbunden ist. Deren Kathode ist mit dem invertierenden Eingang des Differenzverstärkers verbunden und über einen Widerstand 35 auf Masse GND gelegt. Der Transistor des Optokopplers 34 ist mit seinem Kollektor an eine Bezugsspannung UB angelegt. Ein Ausgangsverstärker 37 und paralleler Ausgangswiderstand 38 liefern die Regelgröße R, die proportional ist zum Versorgungsspannungsmesssignal UVM. Der Proportionalitätsfaktor kann über die beiden Widerstände 36, 38 angepasst werden.

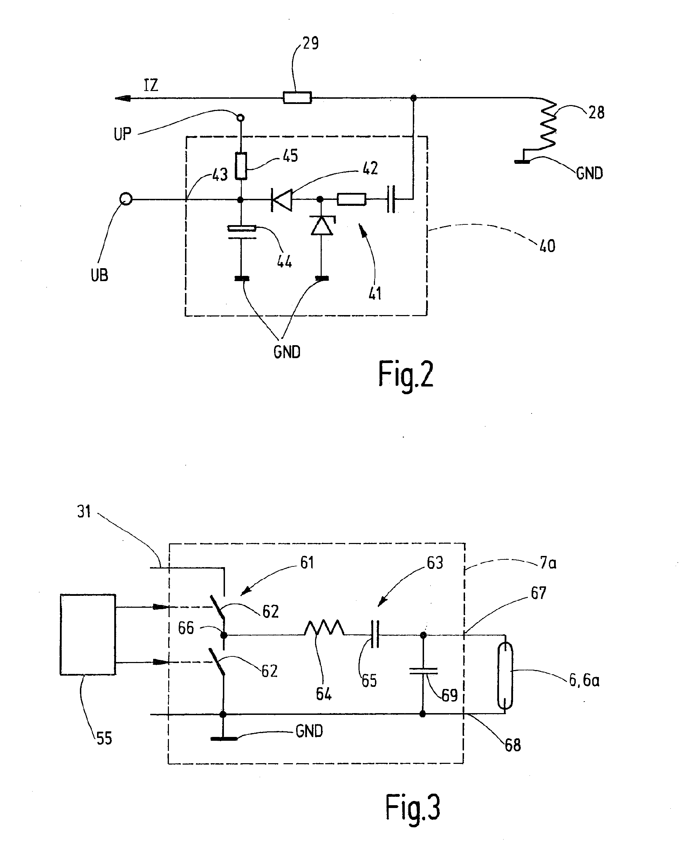

Zur Erzeugung der Bezugsspannung UB kann im Primärkreis 10 eine Bezugsspannungserzeugungseinheit 40 vorhanden sein, die in Figur 2 veranschaulicht ist. Eine Reihenschaltung 41 aus einem Kondensator, einem Widerstand und einer Zenerdiode ist auf einer Seite mit der Messspule 28 und dem Strombegrenzungswiderstand 29 und auf der anderen Seite über die Anode der Zenerdiode mit Masse GND verbunden. Die Kathode der Zenerdiode ist über eine Diode 42 mit dem Bezugsspannungsausgang 43 verbunden. Parallel zum Bezugsspannungsausgang 43 ist ein Bezugsspannungskondensator 44 geschaltet. Der Bezugsspannungsausgang 43 ist über einen weiteren Widerstand 45 mit der Primärspannung UP verbunden.

Die Leistungsfaktorkorrekturschaltung 20 dient zur Reduzierung der Blindleistung und regelt gleichzeitig die Versorgungsspannung UV. Diese Versorgungsspannung UV für den Ausgangskreis 7 wird dabei auf einen gewünschten Gleichspannungswert erhöht, der größer ist, als die Primärspannung UP. Hierfür nutzt die Leistungsfaktorkorrekturschaltung 25 den Ausgangskondensator 32. Dieser kann durch getaktetes Öffnen und Schließen des ersten gesteuerten Schalters 20 auf einen Versorgungsspannungswert aufgeladen werden, der größer ist als der Wert der Primärspannung UP.

Liegt im Normalbetrieb über die Wechselspannungsquelle 9 eine Wechselspannung am Primärkreis 10 des Eingangskreises 8 an, so erzeugt die Leistungsfaktorkorrekturschaltung 25 zwischen die Versorgungsspannung UV für den Ausgangskreis 7. Dieser betreibt mit Hilfe dieser Versorgungsspannung UV das Leuchtmittel 6.

Das Betriebssteuergerät 5 versorgt den Ausgangskreis 7 auch im Notbetrieb bei fehlender Wechselspannungsversorgung. Hierzu dient eine Notspannungsversorgungseinrichtung 50. Die Notspannungsversorgungseinrichtung 50 ist Bestandteil des Sekundärkreises 11 und damit galvanisch von der Wechselspannungsquelle 9 getrennt. Die Notspannungsversorgungseinrichtung 50 weist eine Ladeschaltung 51 für einen beispielsgemäß von einem Akkumulator 52 gebildeten Energiespeicher auf, die an die Versorgungsleitung 31 angeschlossen ist und damit an die Versorgungsspannung UV angelegt ist. Die Ladeschaltung 51 ist über zwei Ladeleitungen 53, 54 mit dem Akkumulator 52 verbunden über die der Akkumulator mit einer Ladespannung UL bzw. einem Ladestrom IL geladen wird. Je nach Akkumulatortyp können verschiedene Ladeverfahren vorgesehen sein. Beispielsweise ist es möglich, die Ladespannung UL oder den Ladestrom IL einzuprägen. Hierfür kann die Ladeschaltung 51 eine Spannungs- oder Stromquelle aufweisen. Fernern können Parameter, wie der Ladezustand des Akkumulators 52 oder dessen Temperatur beim Aufladen oder beim Aufrechterhalten der Ladung berücksichtigt werden. Das entsprechende Ladeverfahren kann in einer Sekundärkreis-Steuereinheit 55 abgelegt sein, die die Ladeschaltung 31 steuert.

Der Akkumulator 52 ist über einen Aufwärtswandler 59 mit dem Ausgangskreis 7 verbunden, um die Akkumulatorspannung auf die benötigte Versorgungsspannung erhöhen zu können. Beim hier beschrieben Ausführungsbeispiel weist dieser eine Spule, eine Diode, einen gesteuerten Schalter 27 auf, der über einen Wandlereingang 60 angesteuert werden kann. Der Aufwärtswandler 59 kann den Ausgangskondensator 32 auf die Versorgungsspannung UV aufladen, die größer ist als die Akkumulatorspannung. Der Ausgangskondensator 32 dient als Ausgangsbauteil für die Leistungskorrekturschaltung 25 im fehlerfreien Normalbetrieb und gleichzeitig als Ausgangsbauteil für den Aufwärtswandler 59 im Notbetriebsfall, wenn über den Primärkreis 10 keine Spannung an den Sekundärkreis 11 übertragen wird, beispielsweise bei einem Fehler in der Wechselspannungsquelle 9. Der Aufwärtswandler 35 wird auch von der Sekundärkreis-Steuereinheit 55 über den Wandlereingang 60 angesteuert.

Im Notbetriebszustand, wenn an der Sekundärwicklung 14 oder am Ausgang der Leistungsfaktorkorrekturschaltung 20 keine Spannung zur Verfügung steht, wird die durch den Akkumulator 52 zur Verfügung gestellte Akkumulatorspannung durch den Aufwärtswandler 59 durch Laden des Ausgangskondensators 32 erhöht als Versorgungsspannung UV für den Ausgangskreis 7 an. Die Aufwärtswandlung funktioniert folgendermaßen: Die vom Akkumulator 52 zur Verfügung gestellte Akkumulatorspannung fällt bei geschlossenem gesteuertem Schalter an der Spule des Aufwärtswandlers 59 ab. In dieser Spule wird magnetische Energie gespeichert. Wird der gesteuerte Schalter geöffnet, versucht die Spule den Stromfluss aufrecht zu erhalten, wodurch sich die Spannung an der Anode der Diode des Aufwärtswandlers 59 erhöht. Sobald die Anodenspannung ausreichend groß ist, öffnet die Diode und der Ausgangskondensator 32 wird auf einen Spannungswert geladen, der größer ist als die Akkumulatorspannung. Durch wiederholtes Öffnen und Schließen des gesteuerten Schalters kann die Sekundärkreis-Steuereinheit 55 auf diese Weise die Versorgungsspannung UV am Ausgangskondensator 32 einstellen.

Die Sekundärkreis-Steuereinheit 55 ist beispielsgemäß als Mikrokontroller ausgeführt. Sie steuert sowohl den Aufwärtswandler 59 als auch die Ladeschaltung 51 der Notspannungsversorgungseinrichtung 50. Alle Steueraufgaben des Sekundärkreises werden dadurch von der Sekundärkreis-Steuereinheit 55 übernommen, was einen sehr einfachen Aufbau des Betriebssteuergeräts 5 ermöglicht. Die Sekundärkreis-Steuereinheit 55 wird bei dem hier beschriebenen bevorzugten Ausführungsbeispiel auch dazu verwendet, den Ausgangskreis 7 des Betriebssteuergeräts 5 anzusteuern.

Eine erste Ausführungsform eines Ausgangskreises 7a ist in Figur 3 dargestellt. Der erste Ausgangskreis 7a weist eine Halbbrückenschaltung 61 mit zwei gesteuerten Halbbrückenschaltern 62 auf, deren Schaltzustände von der Sekundärkreis-Steuereinheit 55 gesteuert werden. Die beiden Halbbrückenschalter 62 sind in Reihe zwischen die Versorgungsleitungen 31 und Masse GND geschaltet. An die Halbbrückenschaltung 61 ist ein Lampenkreis 63 angeschlossen. Der Lampenkreis 63 weist eine Reihenschaltung aus einer Ausgangsspule 64 und einem Koppelkondensator 65 auf, wobei die Ausgangsspule 64 mit einem Anschlusspunkt 66 zwischen den beiden Halbbrückenschaltern 62 verbunden ist. Der Koppelkondensator 65 ist mit einem ersten Lampenanschluss 67 verbunden. Der zweite Lampenanschluss 68 ist mit Masse GND verbunden. Parallel zu den beiden Lampenanschlüssen 67, 68 ist im Lampenkreis 63 ein Resonanzkondensator 69 geschaltet.

Über den Schaltzustand der beiden Halbbrückenschalter 62 kann die Sekundärkreis-Steuereinheit 55 die an der Ausgangsspule 64 anliegende Spannung einstellen. Auch die Wechselspannungsfrequenz wird angepasst an den Lampenkreis 63 eingestellt. Zwischen den beiden Lampenanschlüssen 67, 68 ist als Leuchtmittel 6 eine Gasentladungslampe 6a angeordnet. Zur Zündung der Gasentladungslampe 6a wird der Lampenkreis 63 über die Halbbrückenschaltung 61 mit einer Wechselspannung betrieben, die der Resonanzfrequenz des Lampenkreises 63 entspricht, wodurch die Gasentladungslampe 6a zündet. Durch die Zündung der Gasentladungslampe 6a verändert sich die Resonanzfrequenz des Lampenkreises 63 und die Sekundärkreis-Steuereinheit 55 stellt die entsprechend geänderte Wechselspannungsfrequenz über die Halbbrückenschaltung 61 ein.

Eine alternative Ausgestaltungsmöglichkeit des Ausgangskreises 7 in Form eines zweiten Ausgangskreises 7b ist in Figur 4 gezeigt. Der zweite Ausgangskreis 7b weist einen Sperrwandler 70 auf, dessen Primärseite an der Versorgungsspannung UV anliegt und dessen Sekundärseite an die beiden Lampenanschlüsse 67, 68 angelegt ist. Der Sperrwandler 70 weist eine Sperrwandler-Drossel 71 auf, in Reihe zu deren Primärwicklung 72, ein gesteuerter Sperrwandlerschalter 73 angeordnet ist. Der Schaltzustand des Sperrwandlerschalters 73 wird von der Sekundärkreis-Steuereinheit 55 eingestellt. An eine Sekundärwicklung 74 der Sperrwandler-Drossel 71 ist in Reihe die Kathode einer Sperrwandlerdiode 75 und an die Anode dieser Sperrwandlerdiode 75 ein Wandlerkondensator 76 angeschlossen. Parallel zum Wandlungskondensator 76 zweigen die beiden Lampenanschlüsse 67, 68 ab, so dass das Leuchtmittel 6 parallel zum Wandlerkondensator 76 geschaltet ist. Als Leuchtmittel 6 wird beim zweiten Ausgangskreis 7b eine Halogenlampe 6b verwendet. Bei geschlossenem Sperrwandlerschalter 73 sperrt die Sperrwandlerdiode 75 und der Strom durch die Halogenlampe 6b wird durch die Entladung des Wandlerkondensators 76 erzeugt. Wird der Sperrwandlerschalter 73 geöffnet, versucht die Sekundärwicklung 74 das Magnetfeld aufrecht zu erhalten und erzeugt einen Stromfluss, wobei sich der Wandlerkondensator 76 wieder auflädt.

Der Sperrwandler 70 kann auch gleichzeitig die Funktion eines Aufwärtswandlers ausführen und bei einer nicht dargestellten Abwandlung anstelle des Aufwärtswandlers 59 mit dem Akkumulator 52 verbunden sein.

Beim ersten Ausführungsbeispiel des Betriebssteuergeräts 5 werden die gesteuerten Schalter im Sekundärkreis 11 des Eingangkreises 8 und im Ausgangskreis 7 durch eine gemeinsame Sekundärkreis-Steuereinheit 55 betätigt. Die Energieversorgung der Sekundärkreis-Steuereinheit 55 erfolgt entweder über die Akkumulatorspannung oder über die Versorgungsspannung UV. Dadurch ist die vollständige galvanische Trennung zwischen Primärkreis 10 und Sekundärkreis 11 sicher gestellt. Durch eine entsprechende Ansteuerung des Ausgangskreises 7, 7a, 7b kann sowohl in Normalbetrieb als auch im Notbetrieb eine hohe Energieeffizienz erreicht werden. Die galvanische Trennung des Akkumulators 52 von der Wechselspannungsquelle 9 ist mit geringem Aufwand sichergestellt und erlaubt dennoch eine Regelung der Versorgungsspannung UV.

Die Leistungsfaktorkorrekturschaltung 25 des ersten Ausführungsbeispiels des Betriebssteuergeräts 5 funktioniert folgendermaßen:

Die Primärspannung UP wird gemessen und als Führungsgröße F der Ansteuerschaltung 26 zugeführt. Über das Spannungsmesssignal URM wird der Primärstrom IP erfasst und mit einem Vergleichswert verglichen, der anhand der Führungsgröße ermittelt wurde. Beim Ausführungsbeispiel wird zudem die Versorgungsspannung UV gemessen und über die erste galvanische Trenneinrichtung 33 galvanisch getrennt als Regelgröße R an die Ansteuerschaltung 26 zurückgeführt. In der Ansteuerschaltung 26 wird die Regelgröße mit einem internen Referenzwert verglichen und auf einen gewünschten Wert geregelt. Dies erfolgt durch eine entsprechende Taktung des Ansteuersignals S zum Öffnen und Schließen des ersten gesteuerten Schalters 20.

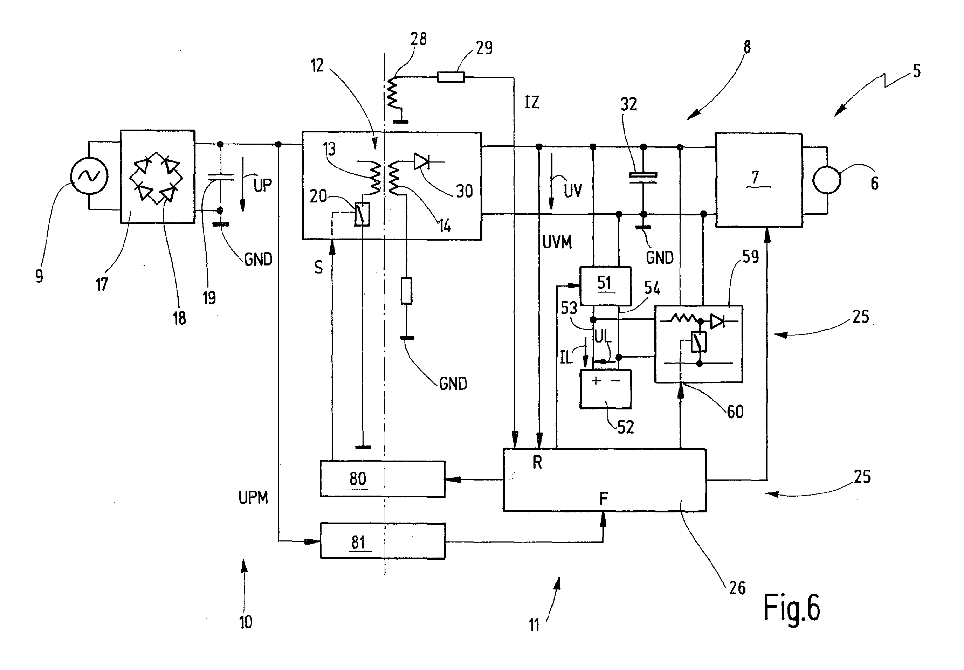

In Figur 6 ist ein zweites Ausführungsbeispiel eines Betriebsteuergeräts 5 dargestellt. Der wesentliche Unterschied zum ersten Ausführungsbeispiel nach Figur 1 ist darin zu sehen, dass sich die Ansteuerschaltung 26 im Sekundärkreis 11 befindet. Das Versorgungsspannungsmesssignal UVM kann daher ohne erste galvanische Trenneinrichtung 33 direkt der Ansteuerschaltung 26 zugeführt werden. Die Messspule 28 und der Messwiderstand 29 sind im Sekundärkreis 11 angeordnet und liefern den Stromverlauf IZ an die Ansteuerschaltung 26. Das Ansteuersignal S für den ersten gesteuerten Schalter 20 wird über eine zweite galvanische Trenneinrichtung 80, die beispielsweise von einem Optokoppler gebildet sein kann, galvanisch getrennt in den Primärkreis 11 übermittelt. Das Primärspannungsmesssignal UPM wird über eine dritte galvanische Trenneinrichtung 81 vom Primärkreis 10 in den Sekundärkreis 11 übertragen und steht dort als Führungsgröße F für die Ansteuerschaltung 26 zur Verfügung. Die dritte galvanische Trenneinrichtung 81 kann denselben Aufau aufweisen wie die erste galvanische Trenneinrichtung 33. Beim zweiten Ausführungsbeispiel nach Figur 6 kann die Bezugsspannungserzeugungseinheit 40 entfallen. Eine notwendige Bezugs- oder Versorgungsspannung kann sekundärseitig sehr einfach erzeugt werden, beispielsweise durch eine zusätzliche sekundärseitige Wicklung, an der die Bezugs- oder Versorgungsspannung sehr einfach abgegriffen werden kann. Auch beim zweiten Ausführungsbeispiel ist eine durchgehende galvanische Trennung nicht nur beim Eingangskreis 8, sondern auch bei der Leistungsfaktorkorrekturschaltung 25 verwirklicht. Im Übrigen wird auf die Ausführungen zum ersten Ausführungsbeispiel verwiesen.

In Abwandlung zu den hier beschriebenen bevorzugten Ausführungsformen können auch andere Leuchtmittel eingesetzt werden, wie zum Beispiel Leuchtdioden, Hochdruckentladungslampen, Kompaktleuchtstofflampen oder Leuchtstofflampen.

Die Erfindung betrifft ein Betriebssteuergerät 5 zum Betreiben eines Leuchtmittels 6, beispielsweise einer Gasentladungslampe 6a. Ein Eingangskreis 8 ist an eine Wechselspannungsquelle 9 anschließbar und durch einen Speicherübertrager 12 in einen Primärkreis 10 und einen Sekundärkreis 11 getrennt. Das Betriebssteuergerät 5 weist eine Leistungsfaktorkorrekturschaltung 25 mit einer Ansteuerschaltung 26 auf. Die Ansteuerschaltung 26 ist im Primärkreis 10 oder im Sekundärkreis 11 enthalten. Sie steuert einen gesteuerten Schalter 20 in Reihe zur Primärwicklung 13 des Speicherübertragers 12 derart an, dass der Blindleistungsanteil möglich gering ist und ein Leistungsfaktor nahe 1 erreicht wird. Hierfür wird der Ansteuerschaltung 26 eine Primärspannung UP und der Primärstrom IP zugeführt. Gleichzeitig dient die Leistungsfaktorkorrekturschaltung 25 auch zur Regelung der am Sekundärkreis 11 zur Verfügung gestellten Versorgungsspannung UV für den Ausgangskreis 7. Zu diesem Zweck wird die Versorgungsspannung UV erfasst und der Ansteuerschaltung 26 als Regelgröße R zur Verfügung gestellt.

### Bezugszeichenliste:

- 5: Betriebssteuergerät
- 6: Leuchtmittel
- 6a: Gasentladungslampe
- 6b: Halogenlampe
- 7, 7a, 7b: Ausgangskreis
- 8: Eingangskreis
- 9: Wechselspannungsquelle
- 10: Primärkreis
- 11: Sekundärkreis
- 12: Speicherübertrager
- 13: Primärwicklung
- 14: Sekundärwicklung

- 17: Gleichrichter
- 18: Gleichrichterdiode
- 19: Glättungskondensator
- 20: erster gesteuerter Schalter
- 21: Messwiderstand

- 25: Leistungsfaktorkorrekturschaltung
- 26: Ansteuerschaltung

- 28: Messspule
- 29: Strombegrenzungswiderstand
- 30: Ausgangsdiode
- 31: Versorgungsleitung
- 32: Ausgangskondensator
- 33: erste galvanische Trenneinrichtung
- 34: Optokoppler
- 35: Differenzverstärker
- 36: Widerstand
- 37: Ausgangsverstärker
- 38: Ausgangswiderstand

- 40: Bezugsspannungserzeugungseinheit
- 41: Reihenschaltung
- 42: Diode
- 43: Bezugsspannungsausgang
- 44: Bezugsspannungskondensator

- 50: Notspannungsversorgungseinrichtung
- 51: Ladeschaltung
- 52: Akkumulator
- 53: Ladeleitung
- 54: Ladeleitung
- 55: Sekundärkreis-Steuereinheit

- 59: Aufwärtswandler
- 60: Wandlereingang
- 61: Halbbrückenschaltung
- 62: Halbbrückenschalter
- 63: Lampenkreis
- 64: Ausgangsspule
- 65: Koppelkondensator
- 66: Anschlusspunkt
- 67: erster Lampenanschluss
- 68: zweiter Lampenanschluss
- 69: Resonanzkondensator
- 70: Sperrwandler
- 71: Sperrwandlerdrossel
- 72: Primärwicklung v. 71
- 73: Sperrwandlerschalter
- 74: Sekundärwicklung v. 71
- 75: Sperrwandlerdiode
- 76: Wandlerkondensator

- 80: zweite galvanische Trenneinrichtung
- 81: dritte galvanische Trenneinrichtung

- F: Führungsgröße
- IL: Ladestrom
- IP: Primärstrom
- R: Regelgröße
- UB: Bezugsspannung
- UL: Ladespannung
- UP: Primärspannung
- UV: Versorgungsspannung

## Patentansprüche

1. Betriebssteuergerät zum Betreiben eines Leuchtmittels (6),
mit einem an eine Spannungsquelle (9) anschließbaren Eingangskreis (8) und einem Ausgangskreis (7), an den das Leuchtmittel (6) anschließbar ist,
wobei der Eingangskreis (8) in einen an die Wechselspannungsquelle (9) anschließbaren Primärkreis (10) und einen galvanisch vom Primärkreis (10) getrennten Sekundärkreis (11) unterteilt ist und der Sekundärkreis (11) eine Versorgungsspannung (UV) für den Ausgangskreis (7) zur Verfügung stellt,
mit einer Leistungsfaktorkorrekturschaltung (25), die eine im Primärkreis (10) oder im Sekundärkreis (11) angeordnete Ansteuerschaltung (26) aufweist, der sowohl eine primärseitige Primärspannung (UP), als auch die Versorgungsspannung (UV) als Eingangsparameter zugeführt werden.

2. Betriebssteuergerät nach Anspruch 1,
**dadurch gekennzeichnet, dass** das VersorgungsspannungsMesssignal (UVM) der Versorgungsspannung (UV) bei im Primärkreis (10) angeordneter Ansteuerschaltung (26)über eine erste galvanische Trenneinrichtung (33) an die Ansteuerschaltung (26) übermittelt wird.

3. Betriebssteuergerät nach Anspruch 1,
**dadurch gekennzeichnet, dass** zur galvanischen Trennung ein Speicherübertrager (12) mit einer Primärwicklung (13) und einer Sekundärwicklung (14) dient.

4. Betriebssteuergerät nach Anspruch 3,
**dadurch gekennzeichnet, dass** in Reihe zur Primärspule (13) ein Messwiderstand (21) zur Messung des Primärstroms (IP) geschaltet ist.

5. Betriebssteuergerät nach Anspruch 3,
**dadurch gekennzeichnet, dass** eine Messspule (28) vorgesehen ist, die zur Erfassung eines Stromverlaufs (IZ) dient, der einen Eingangsparameter für die Leistungsfaktorkorrekturschaltung (25) bildet.

6. Betriebssteuergerät nach Anspruch 3,
**dadurch gekennzeichnet, dass** die Ansteuerschaltung (26) einen in Reihe zur Primärwicklung (13) vorgesehenen ersten gesteuerten Schalter (20) über ein Ansteuersignal (S) schaltet.

7. Betriebssteuergerät nach Anspruch 6,
**dadurch gekennzeichnet, dass** das Ansteuersignal (S) bei im Sekundärkreis (11) angeordneter Ansteuerschaltung (26) über eine zweite galvanische Trenneinrichtung (80) an den gesteuerten Schalter (20) übermittelt wird.

8. Betriebssteuergerät nach Anspruch 1,
**dadurch gekennzeichnet, dass** das Primärspannungs-Messsignal (UPM) der Primärspannung (UP) bei im Sekundärkreis (11) angeordneter Ansteuerschaltung (26) über eine dritte galvanische Trenneinrichtung (81) an die Ansteuerschaltung (26) übermittelt wird.

9. Betriebssteuergerät nach Anspruch 1,
**dadurch gekennzeichnet, dass** der Sekundärkreis (11) eine Notspannungsversorgungseinrichtung (50) für den Ausgangskreis (7) aufweist, die einen Energiespeicher (52) und eine die Ladung des Energiespeichers (52) durchführende Ladeschaltung (51) aufweist, die eine Ladespannung (UL) und/oder einen Ladestrom (IL) für den Energiespeicher (52) zur Verfügung stellt.

10. Betriebssteuergerät nach Anspruch 9,
**dadurch gekennzeichnet, dass** die Notspannungsversorgungseinrichtung (50) eine Sekundärkreis-Steuereinheit (55) aufweist, die insbesondere die Ladeschaltung (51) für den Energiespeicher (52) und/oder den Ausgangskreis (7) steuert.

11. Betriebssteuergerät nach Anspruch 9,
**dadurch gekennzeichnet, dass** die Notspannungsversorgungseinrichtung (50) einen Aufwärtswandler (59) aufweist, über den der Energiespeicher (52) an die Versorgungsspannung (UV) angeschlossen ist.

12. Betriebssteuergerät nach Anspruch 11 in Verbindung mit Anspruch 10,
**dadurch gekennzeichnet, dass** die Sekundärkreis-Steuereinheit (55) zur Steuerung des Aufwärtswandlers (59) verwendet wird.

13. Betriebssteuergerät nach Anspruch 10,
**dadurch gekennzeichnet, dass** die Ansteuerschaltung (26) gleichzeitig als Sekundärkreis-Steuereinheit (55) dient.
